# EUROPEAN PATENT SPECIFICATION

(11) **EP 2 514 619 B1**
(45) Date of publication and mention of the grant of the patent: **19.03.2014**
(21) Application number: 12164080.9
(22) Date of filing: 13.04.2012
(51) Int. Cl.: B60K 5/04, F16H 37/04, B60K 6/44

(54) **Gearbox device**
Getriebevorrichtung
Dispositif de boîte de vitesses

(30) Priority: 18.04.2011 SE 1150333
(43) Date of publication of application: 24.10.2012
(73) Proprietor: Scania CV AB, 151 87 Södertälje (SE)
(72) Inventor: Slapak, Dieter, 151 47 Södertälje (SE)

(56) References cited:
- EP-A1- 0 552 446
- DE-A1- 2 934 314
- GB-A- 896 542

## Description

### Technical field

The present patent application relates to a gearbox device, a power train with such a gearbox device, and a vehicle or bus with such a power train.

### Background

Buses with low floors often have a transversely positioned combustion engine situated at the extreme rear of the vehicle. A gearbox and an angle gear are placed in series with the engine. The engine power is then led from the angle gear to the driveshaft via a propeller shaft.

The gearbox usually comprises a so-called main gear which has adjacent to it a so-called range gear usually of planetary gear type.

EP0552446 A1 describes a bus with combustion engine, gearbox and angle gear placed in series after one another transversely to the longitudinal direction of the bus.

A disadvantage of transversely positioned engines as above is that the vehicle's width imposes a space limitation. This means that the length of, in particular, the engine and the gearbox has to be kept down.

### Summary of the invention

The object of the invention is to propose a gearbox device which in a simple way releases space for engine and gearing devices and also makes it possible for the engine to be supplemented by one or more electric motors.

These objects are achieved by a gearbox device for a motor vehicle, which gearbox device comprises a first gearing device, a second gearing device and an angle gear. According to the invention, the angle gear is situated before the second gearing device.

The angle gear being situated before the second gearing device makes possible a gearbox device of substantially reduced length compared with traditional solutions. This means that a larger engine and/or larger gearing devices may be used while at the same time an electric motor can be placed in series with the engine.

A further advantage is that the angle gear and the shafts leading to and from it can be downsized since the torque acting upon the angle gear decreases substantially when the second gearing device is situated after the angle gear. An output shaft from the angle gear may therefore be dimensioned to transmit a smaller torque than an output shaft from the second gearing device. An electric motor may also be situated under the angle gear.

Being situated before the second gearing device means that the angle gear is powered before the second gearing device. The engine power passes first through the first gearing device, then through the angle gear and thereafter through the second gearing device.

The first gearing device may be a manual gearbox, a hydraulic automatic gearbox or an automated manual gearbox, with or without automated clutch.

The second gearing device may be a planetary gear.

The first gearing device, the second gearing device and the angle gear may be integrated in a single gearbox housing, making possible a compact configuration.

The objects of the invention are also achieved by a power train which comprises a combustion engine, a gearbox device as above, a propeller shaft and a driveshaft. The power train may also comprise one or more electric motors, making hybrid operation possible. An electric motor may be situated between the engine and the gearbox device and/or under the angle gear. The electric motor/motors, the combustion engine and the gearbox device may be placed in series with one another along a shaft transversely to the vehicle's longitudinal axis.

Finally, the objects of the invention are achieved by a motor vehicle or bus with a power train as above. In cases where the power train comprises an electric motor, the bus is a hybrid bus. The bus may be a so-called low-floor bus. The gearbox device and the power train may however also be used in other motor vehicles, e.g. works vehicles.

### Brief description of drawings

The invention is described below on the basis of various embodiment examples illustrated in the attached schematic drawings, in which
- Figure 1: depicts a gearbox device according to the invention,
- Figure 2: depicts a conventional gearbox device, and
- Figure 3: is a cross-section from above through the rear portion of a bus with a power train comprising a gearbox device according to Figure 1.

### Detailed description of embodiment examples

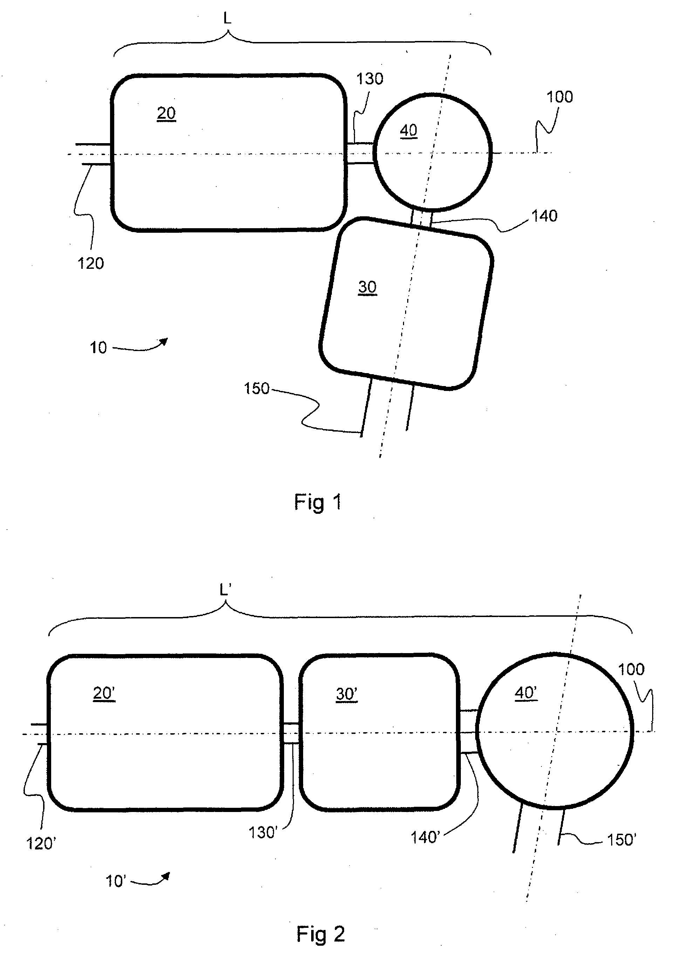

Figure 2 illustrates a conventional gearbox device 10' for a bus. A main gear 20', a range gear in the form of a planetary gear 30', and an angle gear 40' are situated along a shaft 100 which runs at right angles to the longitudinal axis of the bus. Depicted on the left in Figure 2 is an input shaft 120' which conveys torque from a combustion engine (not depicted) to the main gear 20'. A first inner shaft 130' connects the main gear 20' to the planetary gear 30' from which the torque is then led to the angle gear 40' via a second inner shaft 140'. An output shaft 150' from the angle gear 40' then passes the torque on along the power train.

As illustrated in Figure 2, the angle gear 40' causes the second inner shaft 140' to be at an angle relative to the output shaft 150'. The diagram also shows the shafts 140', 150' downstream of the planetary gear 30' as larger than the shafts 120', 130' upstream of the planetary gear 30'. This is because the planetary gear 30' has a gear ratio such that the input speed of the first inner shaft 130' is considerably greater than the output speed of the second input shaft 140', so the opposite applies to the torque which the shafts 130', 140' have to convey.

Figure 1 depicts schematically a gearbox device 10 according to the present invention. The gearbox device 10 comprises a main gear 20, a range gear in the form of a planetary gear 30, and an angle gear 40. The angle gear 40 is situated before the range gear 30. More specifically, the angle gear 40 is situated between the main gear 20 and the range gear 30. The angle gear 40 is placed in series with the main gear 20 along a shaft 100 which, after being fitted in a vehicle, runs at right angles to the vehicle's longitudinal axis.

As may be seen by comparing the schematic diagrams in Figures 1 and 2, the gearbox device 10 according to the invention (Figure 1) is substantially shorter than the conventional gearbox device 10' (Figure 2). The location according to the invention of the angle gear 40 reduces the extent L of the gearbox device 10 along the shaft 100 which runs at right angles to the longitudinal axis of the vehicle, e.g. a bus. The extent L' of the conventional gearbox device 10' along the corresponding shaft 100 is substantially longer.

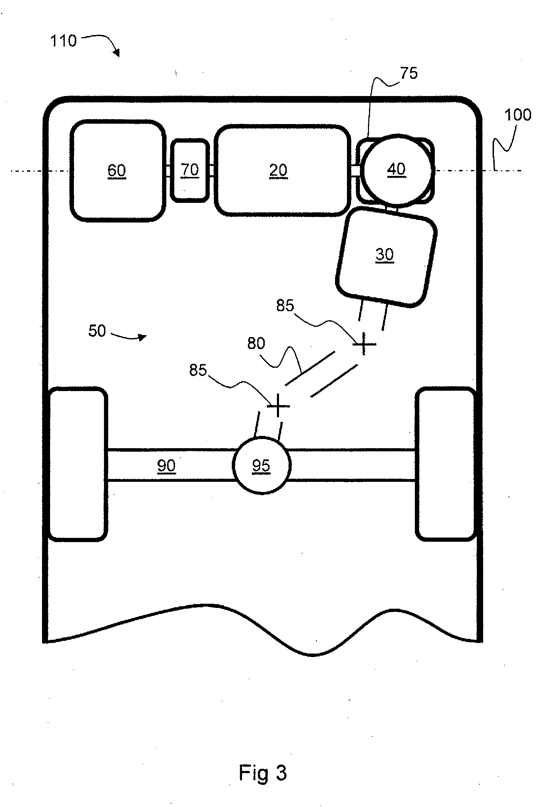

Figures 1 and 3 depict an input shaft 120 which conveys motive power from a combustion engine 60 and, where applicable, an electric motor 70 (see Figure 3) to the main gear 20. After the main gear 20, a first inner shaft 130 conveys the torque to the angle gear 40. A second inner shaft 140 situated at an angle relative to the first inner shaft 130 then leads the torque on from the angle gear 40 to the planetary gear 30. An output shaft 150 from the planetary gear 30 passes the torque on along the power train.

The gear ratio of the planetary gear 30 results in the output shaft 150 being larger than the second inner shaft 140. The fact that the planetary gear 30 according to the invention is shifted downstream in the power train and is situated after the angle gear 40 makes it possible for both the angle gear 40 and the shafts 130, 140 leading to and from it to be smaller. These smaller sizes may be seen by comparing Figure 1 and Figure 2. The planetary gear 30 may have a gear ratio of about 1:4, which means that the torque through the angle gear 40 is reduced to approximately 25% of that for which the angle gear 40' in the conventional version has to be dimensioned. This makes a smaller angle gear 40 possible, which means that the extent L of the gearbox device 10 along the shaft 100 can be further reduced.

Figure 3 illustrates a bus 110, more specifically a hybrid bus, with a power train comprising a gearbox device according to the invention. The power train 50 comprises a combustion engine 60, a first electric motor 70, the main gear 20, the angle gear 40, the planetary gear 30, a propeller shaft 80 with universal joints 85, and a driveshaft 90 with a differential 95. The diagram also depicts a second electric motor 75 situated under the angle gear 40.

The engine 60 and the first electric motor 70 are placed in series with one another adjacent to the main gear 20 along the shaft 100. The engine 60 can in series be supplemented by the first electric motor 70 as a result of the reduced extent L of the gearbox device 10 along the shaft 100. Said reduced extent L also makes it possible to use a relatively large main gearbox 20, e.g. an automated manual gearbox, with or without automated clutch.

The reduced height of the angle gear 40 also releases under it space which can be utilised to accommodate the second electric motor 75. Its location under the angle gear 40 means that the second electric motor 75, when the power train 50 is installed in a bus, will be at a lower vertical level than the angle gear. The engine 60 and the second electric motor 75 are placed in series with one another adjacent to the main gear 20 along the shaft 100. The extent L of the gearbox device 10 along the shaft 100 is not affected by the second electric motor 75. The second electric motor 75 is close to the countershaft (undepicted) of the main gear 20. The hybrid bus may be provided with the first electric motor 70 and/or the second electric motor 75.

The engine 60 and the motors 70, 75, with the associated main gear 20, angle gear 40 and planetary gear 30, are here depicted as situated at the extreme rear of the bus, behind the driveshaft 90 of the rear wheels, but locations above or even in front of the driveshaft are also possible.

Figure 1 and 3 depict the main gearbox 20, the planetary gear 30 and the angle gear 40 as separate units but they may with advantage be integrated (not depicted) in a gearbox housing.

## Claims

1. A gearbox device (10) for a motor vehicle, comprising a first gearing device (20), an angle gear (40) and a second gearing device (30) which are connected in series so that during use a torque conveyed by the gearbox device (10) passes first through the first gearing device (20), then through the angle gear (40) and thereafter through the second gearing device (30), **characterised in that** the first gearing device (20) is a main gearbox and the second gearing device (30) is a range gearbox.

2. A gearbox device (10) according to claim 1, further comprising an output shaft (140) from the angle gear (40), and an output shaft (150) from the second gearing device (30), the output shaft (140) from the angle gear (40) being configured to convey a smaller torque than the output shaft (150) from the second gearing device (30).

3. A gearbox device (10) according to any one of the foregoing claims, in which the first gearing device (20) is a manual gearbox, a hydraulic automatic gearbox or an automated manual gearbox, with or without automated clutch.

4. A power train (50) comprising a combustion engine (60), a gearbox device (10) according to any one of the foregoing claims, a propeller shaft (80) and a driveshaft (90).

5. A power train (50) according to claim 4, further comprising one or more electric motors (70, 75).

6. A power train (50) according to claim 5, in which an electric motor (70) is situated between the engine (60) and the gearbox device (10).

7. A power train (50) according to claim 5, in which an electric motor (75) is connected to the first gearing device (20) and is situated under the angle gear (40).

8. A power train (50) according to claim 6, in which a second electric motor (75) is connected to the first gearing device (20) and is situated under the angle gear (40).

9. A motor vehicle (110) comprising a power train (50) according to any one of claims 4 to 8.

10. A bus (110) comprising a power train (50) according to any one of claims 4 to 8.

## Patentansprüche

1. Getriebevorrichtung (10) für ein Kraftfahrzeug, umfassend eine erste Getriebevorrichtung (20), ein Winkelgetriebe (40) und eine zweite Getriebevorrichtung (30), welche derart hintereinander geschalten sind, dass während des Betriebs ein Drehmoment, welches von der Getriebevorrichtung (10) übertragen wird, zuerst durch die erste Getriebevorrichtung (20), dann durch das Winkelgetriebe (40) und danach durch die zweite Getriebevorrichtung (30) verläuft, **dadurch gekennzeichnet, dass** die erste Getriebevorrichtung (20) ein Hauptgetriebe und die zweite Getriebevorrichtung (30) ein Bereichsgetriebe ist.

2. Getriebevorrichtung (10) nach Anspruch 1, weiter umfassend eine Abtriebswelle (140) vom Winkelgetriebe (40), und eine Abtriebswelle (150) von der zweiten Getriebevorrichtung (30), wobei die Abtriebswelle (140) vom Winkelgetriebe (40) ausgebildet ist, um ein kleineres Drehmoment als die Abtriebswelle (150) von der zweiten Getriebevorrichtung (30) zu übertragen.

3. Getriebevorrichtung (10) nach einem der vorangehenden Ansprüche, in welcher die erste Getriebevorrichtung (20) eine manuelle Getriebevorrichtung, eine automatische hydraulische Getriebevorrichtung oder eine automatisierte manuelle Getriebevorrichtung, mit oder ohne automatisierter Kupplung, ist.

4. Antriebsstrang (50), umfassend einen Verbrennungsmotor (60), eine Getriebevorrichtung (10) nach einem der vorangehenden Ansprüche, eine Kardanwelle (80) und eine Antriebswelle (90).

5. Antriebsstrang (50) nach Anspruch 4, weiter umfassend einen oder mehrere Elektromotoren (70, 75).

6. Antriebsstrang (50) nach Anspruch 5, in welchem sich ein Elektromotor (70) zwischen dem Motor (60) und der Getriebevorrichtung (10) befindet.

7. Antriebsstrang (50) nach Anspruch 5, in welchem ein Elektromotor (75) mit der ersten Getriebevorrichtung (20) verbunden ist und sich unter dem Winkelgetriebe (40) befindet.

8. Antriebsstrang (50) nach Anspruch 6, in welchem ein zweiter Elektromotor (75) mit der ersten Getriebevorrichtung (20) verbunden ist und sich unter dem Winkelgetriebe (40) befindet.

9. Kraftfahrzeug (110), umfassend einen Antriebsstrang (50) nach einem der Ansprüche 4 bis 8.

10. Bus (110), umfassend einen Antriebsstrang (50) nach einem der Ansprüche 4 bis 8.

## Revendications

1. Dispositif de boîte de vitesses (10) pour un véhicule à moteur, comprenant un premier dispositif d'engrènement (20), un renvoi d'angle (40) et un deuxième dispositif d'engrènement (30) qui sont reliés en série, de telle sorte que, durant l'utilisation, un couple acheminé par le dispositif de boîte de vitesses (10) passe premièrement par le premier dispositif d'engrènement (20), puis par le renvoi d'angle (40), puis par le deuxième dispositif d'engrènement (30), **caractérisé en ce que** le premier dispositif d'engrènement (20) est une boîte de vitesses principale et **en ce que** le deuxième dispositif d'engrènement (30) est une boîte de vitesses de plage.

2. Dispositif de boîte de vitesses (10) selon la revendication 1, comprenant de plus un arbre de sortie (140) à partir du renvoi d'angle (40), et un arbre de sortie (150) à partir du deuxième dispositif d'engrènement (30), l'arbre de sortie (140) à partir du renvoi d'angle (40) étant configuré de façon à acheminer un couple inférieur à celui de l'arbre de sortie (150) à partir du deuxième dispositif d'engrènement (30).

3. Dispositif de boîte de vitesses (10) selon l'une quelconque des revendications précédentes, dans lequel le premier dispositif d'engrènement (20) est une boîte de vitesse manuelle, une boîte de vitesses automatique hydraulique ou une boîte de vitesses manuelle automatique, avec ou sans embrayage automatique.

4. Groupe motopropulseur (50), comprenant un moteur à combustion (60), un dispositif de boîte de vitesses (10) selon l'une quelconque des revendications précédentes, un arbre de transmission (80) et un arbre d'entraînement (90).

5. Groupe motopropulseur (50) selon la revendication 4, comprenant de plus un ou plusieurs moteurs électriques (70, 75).

6. Groupe motopropulseur (50) selon la revendication 5, dans lequel un moteur électrique (70) est situé entre le moteur (60) et le dispositif de boîte de vitesses (10).

7. Groupe motopropulseur (50) selon la revendication 5, dans lequel un moteur électrique (75) est relié au premier dispositif d'engrènement (20) et est situé sous le renvoi d'angle (40).

8. Groupe motopropulseur (50) selon la revendication 6, dans lequel un deuxième moteur électrique (75) est relié au premier dispositif d'engrènement (20) et est situé sous le renvoi d'angle (40).

9. Véhicule à moteur (110), comprenant un groupe motopropulseur (50) selon l'une quelconque des revendications 4 à 8.

10. Autocar (110) comprenant un groupe motopropulseur (50) selon l'une quelconque des revendications 4 à 8.
